# FASCICULE DE BREVET EUROPEEN

(11) **EP 3 835 730 B1**
(45) Date de publication et mention de la délivrance du brevet: **17.07.2024**
(21) Numéro de dépôt: 20213059.7
(22) Date de dépôt: 10.12.2020
(51) Int. Cl.: G01D 21/00

(54) **TECHNIQUE D'EMISSION D'UNE MESURE EFFECTUEE PAR UN CAPTEUR**
TECHNIK ZUR ÜBERTRAGUNG EINER MESSUNG DURCH EINEN SENSOR
TECHNIQUE FOR TRANSMITTING A MEASUREMENT MADE BY A SENSOR

(30) Priorité: 12.12.2019 FR 1914300
(43) Date de publication de la demande: 16.06.2021
(73) Titulaire: Orange, 92130 Issy-les-Moulineaux (FR)
(72) Inventeur: L'HEREEC, Kévin, 92326 CHATILLON (FR); RAMPARANY, Fano, 92326 CHATILLON (FR)

(56) Documents cités:
- WO-A1-03/007099
- JP-A- 2008 052 415
- US-A1- 2013 144 562

## Description

L'invention se rapporte au domaine général des télécommunications.

L'invention concerne plus particulièrement une technique d'émission d'une mesure effectuée par un capteur.

Dans le domaine de la métrologie, des capteurs permettent de mesurer une grandeur physique. Ils sont calibrés de manière à envoyer une valeur mesurée en fonction de règles fixes. A titre illustratif, selon une première méthode, la valeur mesurée ou mesure est envoyée lorsqu'une variation entre cette mesure et la mesure précédente qui est supérieure à un seuil est détectée. Ce seuil, appelé « seuil de détection » ou « seuil de variation » est configuré par défaut en usine ou bien par un administrateur du capteur. Toutefois, un utilisateur distant peut s'interroger sur la fiabilité du capteur. En effet, si la grandeur physique mesurée varie peu, la dernière mesure peut être relativement ancienne. L'utilisateur peut alors se demander si une mesure a été perdue. Toujours à titre illustratif, selon une deuxième méthode, la mesure est envoyée périodiquement, par exemple toutes les quinze minutes. Cette période, appelée « intervalle de mesure », est configurée par défaut en usine ou bien par un administrateur du capteur. Cet intervalle de mesure peut être non adapté pour la grandeur physique observé. Par exemple, les mesures peuvent être identiques alors que la grandeur physique a évolué de manière importante entretemps. Il est également possible de combiner ces deux méthodes pour émettre une mesure, en fonction d'un seuil de variation et d'un intervalle de mesure. On comprend que cette combinaison des deux méthodes peut présenter les inconvénients précédemment décrits. Le seuil de variation et l'intervalle de mesure peuvent être mal calibrés par l'opérateur. Ainsi un seuil de variation et un intervalle de mesure trop faibles déclencheraient l'émission de mesures trop fréquemment. L'autonomie du capteur, en particulier lorsqu'il fonctionne avec une batterie, en est affectée. Un seuil de variation et un intervalle de mesure trop élevés entraînent un manque de confiance de l'utilisateur quant à la fiabilité du capteur.

La publication brevet JP2008052415A décrit un procédé d'émission d'une mesure dans lequel l'intervalle de mesure est choisi entre deux valeurs en fonction de la comparaison d'une variation avec deux seuils.

Un des buts de l'invention est de remédier à des insuffisances/inconvénients de l'état de la technique et/ou d'y apporter des améliorations.

Selon un premier aspect, l'invention a pour objet un procédé d'émission d'une mesure effectuée par un capteur à un instant de mesure courant, un instant de mesure et une mesure formant un point de mesure. Ce procédé comprend :
- détermination d'un seuil à partir de points de mesure précédant dans le temps le point de mesure courant sur une fenêtre de collecte, dans lequel le seuil déterminé correspond au plus grand des coefficients directeurs entre deux points de mesure successifs sur la fenêtre de collecte ;
- lorsqu'un coefficient directeur d'une droite passant par le point de mesure courant et le point de mesure immédiatement précèdent est supérieur au seuil, émission de la mesure à l'expiration d'une durée d'attente correspondant à l'intervalle de temps minimum entre deux instants de mesure successifs sur la fenêtre de collecte ;
- lorsque ledit coefficient directeur est inférieur au seuil, émission de la mesure à l'expiration d'une durée d'attente correspondant à l'intervalle de temps maximum entre deux instants de mesure successifs sur la fenêtre de collecte.

La technique proposée permet ainsi d'émettre les mesures au moment où elles vont permettre de garantir un bon fonctionnement du capteur. Le seuil et l'intervalle de mesure prennent en compte les mesures précédemment effectuées. La technique proposée adapte un seuil d'émission et un intervalle de mesure en fonction de plusieurs mesures précédentes, et donc en fonction de la grandeur physique mesurée. Ceci permet à un utilisateur d'être rassuré sur le bon fonctionnement du capteur (en garantissant que les mesures ne sont pas trop anciennes) en captant à la fois des variations significatives de la grandeur physique tout en garantissant l'autonomie du capteur. L'autonomie du capteur est préservée car les mesures sont émises de manière optimisée. L'émission de la mesure ne s'effectue pas lorsque cette mesure ne présente pas d'intérêt pour l'utilisateur du capteur.

Une dizaine de mesures précédentes peut être prise en compte lors de la détermination du seuil et de l'intervalle entre deux mesures. La fenêtre de collecte est une fenêtre glissante mise à jour à chaque nouvelle mesure.

A titre illustratif, lorsque deux capteurs mesurent l'intensité lumineuse mais que l'un des deux est placé dans une véranda (mesure de l'intensité lumineuse venant de l'extérieur) et que le deuxième est placé dans une pièce à l'intérieur d'une maison (mesure de l'intensité lumineuse à l'intérieur), on comprend qu'un même seuil ne peut être utilisé pour les deux capteurs. Il est ainsi relativement fastidieux pour l'utilisateur de configurer les seuils pour chacun des capteurs. Avec la technique proposée, chaque capteur va voir son seuil s'adapter en fonction des variations constatées dans les mesures passées sur la fenêtre de collecte. Le procédé proposé permet ainsi de faciliter la configuration des capteurs dans leur environnement.

Ainsi, selon l'invention, le seuil déterminé correspond au plus grand des coefficients directeurs entre deux points de mesure successifs sur la fenêtre de collecte.

Ceci permet d'ajuster le seuil en fonction des variations observées sur la fenêtre de collecte, en particulier en fonction de la variabilité de la grandeur physique.

Dans un mode de réalisation particulier, lorsqu'une nouvelle mesure est effectuée par le capteur, la durée d'attente associée à la mesure précédente n'étant pas expirée, le procédé est de nouveau mis en oeuvre, la durée d'attente associée à la nouvelle mesure prend en compte la durée d'attente associée à la mesure précédente non réalisée.

Ceci permet de ré-adapter l'intervalle d'émission en fonction d'une nouvelle mesure.

Selon un deuxième aspect, l'invention concerne un capteur, configuré pour effectuer des mesures à des instants de mesure. Ce capteur comprend un module de contrôle d'émission d'une mesure configuré pour :
- déterminer un seuil à partir de points de mesure précédant dans le temps un point de mesure courant sur une fenêtre de collecte, un instant de mesure et une mesure formant un point de mesure, dans lequel le seuil déterminé correspond au plus grand des coefficients directeurs entre deux points de mesure successifs sur la fenêtre de collecte ;
- attendre une durée d'attente, ladite durée d'attente correspondant à l'intervalle de temps minimum entre deux instants de mesure successifs sur la fenêtre de collecte lorsqu'un coefficient directeur d'une droite passant par le point de mesure courant et le point de mesure immédiatement précèdent est supérieur au seuil ou ladite durée d'attente correspondant à l'intervalle de temps maximum entre deux instants de mesure successifs sur la fenêtre de collecte lorsque ce coefficient directeur est inférieur au seuil,
- commander l'émission de la mesure par l'intermédiaire d'une interface réseau, lorsque la durée d'attente est écoulée.

Les avantages énoncés pour le procédé d'émission d'une mesure effectuée par un capteur selon le premier aspect sont transposables directement à un capteur.

Ce capteur peut bien entendu comporter en termes structurels les différentes caractéristiques relatives au procédé d'émission d'une mesure effectuée par un capteur tel que décrit précédemment, qui peuvent être combinées ou prises isolément.

Selon un troisième aspect, l'invention concerne un programme pour un capteur, comprenant des instructions de code de programme destinées à commander l'exécution des étapes du procédé d'émission d'une mesure effectuée par un capteur précédemment décrit mises en oeuvre par un capteur, lorsque ce programme est exécuté par ce capteur et un support d'enregistrement lisible par un capteur sur lequel est enregistré un programme pour un capteur.

Les avantages énoncés pour le procédé d'émission d'une mesure effectuée par un capteur selon le premier aspect sont transposables directement au programme pour un capteur et au support d'enregistrement.

La technique d'émission d'une mesure effectuée par un capteur sera mieux comprise à l'aide de la description suivante de modes de réalisation particuliers, en référence aux dessins annexés sur lesquels :
- la figure 1 représente un système dans lequel est mis en oeuvre le procédé d'émission d'une mesure effectuée par un capteur dans un mode de réalisation particulier ;
- la figure 2A illustre des étapes d'un procédé d'émission d'une mesure effectuée par un capteur selon un mode de réalisation particulier ;
- la figure 2B illustre une des étapes du procédé d'émission selon un mode de réalisation particulier ;
- la figure 2C illustre une des étapes du procédé d'émission selon un mode de réalisation particulier ;
- la figure 3 représente un capteur dans un mode de réalisation particulier.

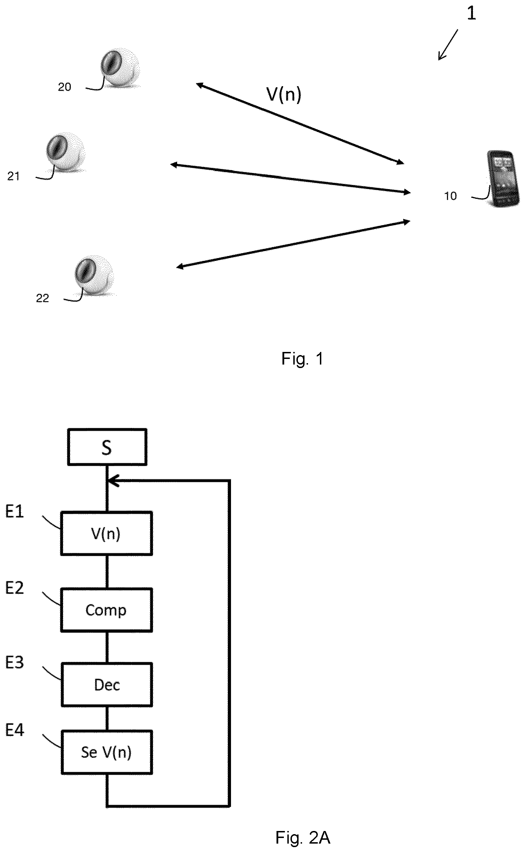

La **figure 1** représente un système 1 dans lequel est mis en oeuvre le procédé d'émission d'une mesure effectuée par un capteur dans un mode de réalisation particulier. Ce système 1 comprend :
- plusieurs capteurs 20, 21, 22 configurés pour effectuer une mesure V(n) d'une grandeur physique donnée ;
- un dispositif de réception 10, configuré pour recevoir une mesure d'une grandeur physique effectuée par les capteurs.

Les capteurs 20-22 sont par exemple configurés pour effectuer une mesure d'intensité lumineuse. Tels que représentés sur la figure 1, les capteurs 20-22 mesurent la même grandeur physique. Aucune limitation n'est attachée à cette représentation, les capteurs pouvant être de type différent et mesurer des grandeurs physiques distinctes. Le capteur peut avoir des domaines d'application diverses tel que la domotique, l'aérospatial, la météorologie en adéquation avec des contraintes énergétique et/ou de fiabilité forte. Dans un mode de réalisation particulier, les capteurs 20-22 sont des capteurs autonomes, c'est-à-dire alimentés par batterie. Optimiser les émissions de mesure permet alors d'économiser la batterie.

Dans un mode de réalisation particulier, les capteurs 20-22 communiquent avec le dispositif de réception 10 par un protocole de communication filaire, par exemple UART (pour « *Universal Asynchronous Receiver Transmitter* »), SPI (pour « *Serial Peripheral interface* »), FC (pour « *Interintegrated-circuit* »)... Dans un autre mode de réalisation particulier, les capteurs 20-22 communiquent avec le dispositif de réception 10 par un protocole de communication sans-fil, par exemple Wi-Fi, Zwave, Zigbee, LORA (pour *« Long Range* »), ...Il est bien entendu que ces différents protocoles de communication peuvent cohabiter.

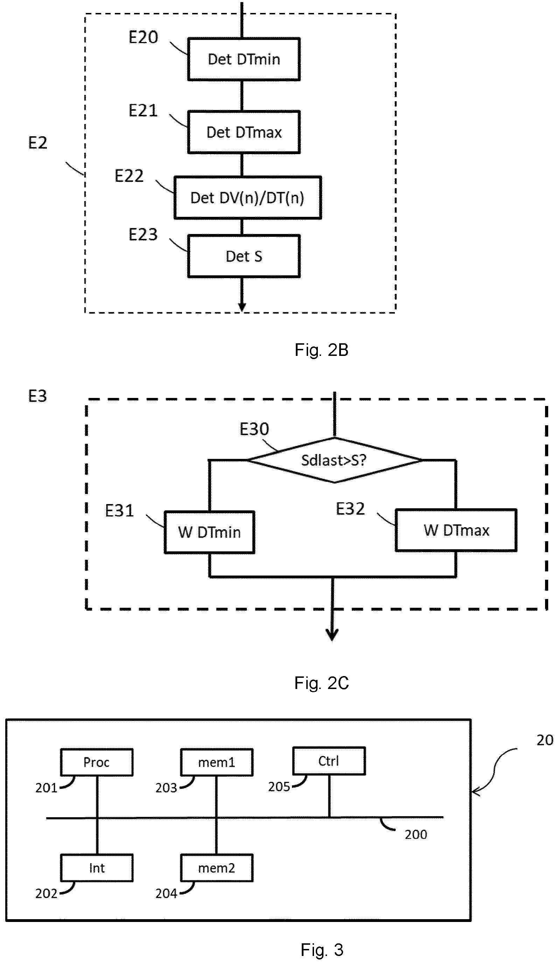

Le procédé d'émission d'une mesure V(n) effectuée par un capteur à un instant de mesure courant T(n) va maintenant être décrit en relation avec les figures 2A, 2B et 2C dans un système 1 tel que représenté à la figure 1. On se place par la suite au niveau du capteur 20.

Par la suite, un instant de mesure T(i) et une mesure V(i) forment un point de mesure P(i). Une fenêtre de collecte comprend un nombre M de points de mesure, dont le point de mesure P(n) à l'instant courant T(n). Par exemple, M peut prendre la valeur de dix. Cette fenêtre de collecte est une fenêtre glissante : elle comprend les M derniers points de mesure.

Des étapes du procédé d'émission d'une mesure effectuée par un capteur 20 sont décrites en relation avec la **figure 2A** selon un mode de réalisation particulier. Dans une étape E1, le capteur 20 effectue la mesure V(n) à un instant courant T(n). Ce point de mesure P(n) est ajouté à l'ensemble des M points de mesure regroupés dans la fenêtre de collecte, le point de mesure le plus ancien étant supprimé de cette fenêtre de collecte. Ainsi, la fenêtre de collecte comprend le point de mesure courant et les points de mesure précédant le point de mesure courant dans le temps.

Dans une étape E2, le capteur 20 détermine un seuil S à partir des points de mesure compris dans la fenêtre de collecte. Ainsi chaque fois qu'une nouvelle mesure est effectuée, celle-ci est prise en compte pour adapter le seuil S.

Dans une étape E3, le capteur 20 compare un coefficient directeur d'une droite passant par le point de mesure courant P(n) et le point de mesure immédiatement précèdent P(n-1) avec le seuil S. En fonction du résultat de cette comparaison, le capteur 20 attend une durée de référence, déterminée en fonction des intervalles de temps entre deux instants de mesure successifs sur la fenêtre de collecte. Dans une étape E4, le capteur 20 émet la mesure effectuée au dispositif récepteur 10.

L'étape E2 de détermination du seuil S va être décrite de manière plus précise en relation avec la **figure 2B****.**

On note DT(i) la durée s'écoulant entre la mesure effectuée à l'instant T(i-1) et l'instant T(i). DT(i) représente la durée s'écoulant entre une mesure et celle effectuée immédiatement avant. L'ensemble des intervalles de temps sur la fenêtre de collecte est noté ST(n,M)={DT(i)} pour i compris entre n-M+1 et n.

On note DV(i) la variation entre deux mesures successives, c'est-à-dire entre la mesure V(i) effectuée à l'instant T(i) et la mesure V(i-1) effectuée à l'instant T(i-1) : DV(i)=V(i)-V(i-1).

Dans une étape E20, le capteur 20 détermine l'intervalle de temps minimum, noté DTmin, entre deux instants de mesure successifs sur la fenêtre de collecte : DTmin=min(ST(n,M)).

Dans une étape E21, le capteur 20 détermine l'intervalle de temps maximum, noté DTmax, entre deux instants de mesure successifs sur la fenêtre de collecte : DTmax=max(ST(n,M)).

Dans une étape E22, le capteur 20 calcule le coefficient directeur SD(n) d'une droite passant par le point de mesure courant P(n) et le point de mesure immédiatement précèdent P(n-1) : SD(n)=DV(n)/DT(n). Il est ici souligné que les coefficients directeurs SD(i) pour i variant de n-M+1 à n-1 ont déjà été calculés lors d'une itération précédente de l'étape E22 (pour le point de mesure P(n-1)). L'ensemble de ces coefficients directeurs est noté SD(n,M)={Dv(i)/DT(i)} pour i variant de n-M+1 à n.

Dans une étape E23, le capteur 20 détermine le plus grand des coefficients directeurs SDmax de l'ensemble SD(n,M), c'est-à-dire le plus grand des coefficients directeurs entre deux points de mesure successifs sur la fenêtre de collecte, et affecte cette valeur SDmax au seuil S. On constate ainsi que le seuil S est calculé à partir des points de mesure compris dans la fenêtre de collecte et est susceptible de varier à chaque nouvelle mesure. Le seuil S prend ainsi en compte la variabilité de la grandeur physique mesurée.

L'étape E3 de décision d'émission en fonction du seuil S va être décrite de manière plus précise en relation avec la **figure 2C****.**

Dans une étape E30, le coefficient directeur SD(n) est comparé au seuil S. Lorsque le coefficient directeur SD(n) est supérieur au seuil, une durée d'attente DTmin correspondant à l'intervalle de temps minimum entre deux instants de mesure successifs sur la fenêtre de collecte est déclenchée dans une étape E31. Lorsque le coefficient directeur SD(n) est inférieur ou égal au seuil S, une durée d'attente DTmax correspondant à l'intervalle de temps maximum entre deux instants de mesure successifs sur la fenêtre de collecte est déclenchée dans une étape E32. A l'expiration de cette durée d'attente, le capteur 20 met en oeuvre l'étape E4 d'émission. Cette durée d'attente variable permet d'adapter l'émission en fonction de la variabilité de la grandeur physique mesurée tout en permettant à l'utilisateur de ne pas remettre en cause la fiabilité des mesures effectuées par le capteur.

Dans un mode de réalisation particulier, lorsqu'une nouvelle mesure V(n+1) est effectuée par le capteur 20 à l'étape E1 alors que la durée d'attente associée à la mesure précédente n'est pas expirée, les étapes E2 et E3 sont de nouveau mises en oeuvre avec le nouveau point de mesure P(n+1), ce dernier devenant le point de mesure courant, afin de déterminer de nouvelles valeurs DTmin, DTmax et S. La prise en compte de ce nouveau point de mesure P(n+1) peut alors amener à modifier la durée d'attente, c'est-à-dire à la raccourcir ou à la rallonger. La durée d'attente associée à la nouvelle mesure prend ainsi en compte la durée d'attente associée à la mesure précédente non réalisée. La nouvelle mesure V(n+1) est alors émise à l'étape E4, une fois la durée d'attente expirée.

La **figure 3** illustre de manière schématique un capteur 20 dans un mode de réalisation particulier. Le capteur 20 comprend notamment :
- un processeur matériel 201 pour exécuter des instructions de code de modules logiciels ;
- une zone mémoire 203, configurée pour mémoriser un programme qui comprend des instructions de code pour mettre en oeuvre des étapes du procédé d'émission d'une mesure ;
- une mémoire de stockage 204, configurée pour stocker des données utilisées lors de la mise en oeuvre du procédé d'émission d'une mesure, telles que des paramètres utilisés pour des calculs effectués par le processeur 201, des données intermédiaires de calculs effectués par le processeur 201, etc ;
- une interface de réseau 202 ;
- un module de contrôle d'émission d'une mesure 205 ;
qui sont connectés entre eux au travers d'un bus 200.

Bien entendu, les éléments constitutifs du capteur peuvent être connectés au moyen d'une connexion autre qu'un bus.

Le processeur 201 commande les opérations du capteur. La zone mémoire 203 stocke au moins un code de programme d'ordinateur qui lorsqu'il est exécuté par le processeur 201 met en oeuvre les différentes fonctions du capteur. Le processeur 201 peut être formé par tout matériel ou logiciel connu et approprié, ou par une combinaison de matériel et de logiciel. Par exemple, le processeur 201 peut être formé par un matériel dédié tel qu'un circuit de traitement, ou par une unité de traitement programmable telle qu'une unité centrale de traitement (*Central Processing Unit*) qui exécute un programme stocké dans une mémoire de celui-ci.

La zone mémoire 203 peut être formée par n'importe quel moyen approprié capable de stocker le programme d'une manière lisible par un ordinateur. Des exemples de zone mémoire 203 comprennent des supports de stockage non transitoires lisibles par ordinateur tels que des dispositifs de mémoire à semi-conducteurs, et des supports d'enregistrement magnétiques, optiques ou magnéto-optiques chargés dans une unité de lecture et d'écriture. Le programme amène le processeur 201 à exécuter un procédé d'émission d'une mesure selon un mode de réalisation particulier.

Une interface réseau 202 fournit une connexion entre le capteur 20 et un dispositif récepteur 10 par l'intermédiaire d'un réseau de communication s'appuyant sur un réseau d'accès sous-jacent. L'interface réseau 202 peut fournir, en fonction de sa nature, une connexion filaire ou sans fil.

Le module de contrôle d'émission d'une mesure 205 est configuré pour :
- déterminer un seuil à partir de points de mesure précédant dans le temps le point de mesure courant sur une fenêtre de collecte,
- attendre une durée d'attente, cette durée d'attente correspondant à l'intervalle de temps minimum entre deux instants de mesure successifs sur la fenêtre de collecte lorsqu'un coefficient directeur d'une droite passant par le point de mesure courant et le point de mesure immédiatement précèdent est supérieur au seuil et cette durée d'attente correspondant à l'intervalle de temps maximum entre deux instants de mesure successifs sur la fenêtre de collecte lorsque ce coefficient directeur est inférieur au seuil,
- commander l'émission de la mesure par l'intermédiaire de l'interface réseau 202, une fois la durée d'attente écoulée.

La technique d'émission d'une mesure est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et/ou logiciels, apte à mettre en oeuvre une fonction ou un ensemble de fonctions, selon ce qui est décrit précédemment pour le module concerné.

Un composant logiciel correspond à un ou plusieurs programmes d'ordinateur, un ou plusieurs sousprogrammes d'un programme, ou de manière plus générale à tout élément d'un programme ou d'un logiciel. Un tel composant logiciel est stocké en mémoire puis chargé et exécuté par un processeur de données d'une entité physique et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware). Il peut s'agir d'un composant matériel programmable ou non, avec ou sans processeur intégré pour l'exécution de logiciel. Il s'agit par exemple d'un circuit intégré, d'une carte à puce, d'une carte électronique pour l'exécution d'un micrologiciel (firmware), etc.

Dans un mode de réalisation particulier, le capteur 20 est configuré pour mettre en oeuvre des étapes du procédé d'émission d'une mesure, mises en oeuvre par un capteur. Il s'agit de préférence de modules logiciels comprenant des instructions logicielles pour faire exécuter les étapes (ou des actions) du procédé d'émission d'une mesure précédemment décrit, mises en oeuvre par un capteur. L'invention concerne donc aussi :
- un programme pour un capteur, comprenant des instructions de code de programme destinées à commander l'exécution des étapes (ou des actions) du procédé d'émission d'une mesure précédemment décrit, lorsque ledit programme est exécuté par ce capteur ;
- un support d'enregistrement lisible par un capteur sur lequel est enregistré le programme pour un capteur.

Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

L'invention concerne donc aussi un capteur configuré pour émettre une mesure, comprenant un processeur configuré pour :
- déterminer un seuil à partir de points de mesure précédant dans le temps le point de mesure courant sur une fenêtre de collecte ;
- lorsqu'un coefficient directeur d'une droite passant par le point de mesure courant et le point de mesure immédiatement précèdent est supérieur au seuil, émettre la mesure à l'expiration d'une durée d'attente correspondant à l'intervalle de temps minimum entre deux instants de mesure successifs sur la fenêtre de collecte ;
- lorsque ledit coefficient directeur est inférieur au seuil, émettre la mesure à l'expiration d'une durée d'attente correspondant à l'intervalle de temps maximum entre deux instants de mesure successifs sur la fenêtre de collecte.

## Revendications

1. Procédé d'émission d'une mesure effectuée par un capteur à un instant de mesure courant, un instant de mesure et une mesure formant un point de mesure, ledit procédé comprenant :
- détermination (E2) d'un seuil à partir de points de mesure précédant dans le temps le point de mesure courant sur une fenêtre de collecte, dans lequel le seuil déterminé (E23) correspond au plus grand des coefficients directeurs entre deux points de mesure successifs sur la fenêtre de collecte ;
- lorsqu'un coefficient directeur d'une droite passant par le point de mesure courant et le point de mesure immédiatement précèdent est supérieur au seuil, émission (E31) de la mesure à l'expiration d'une durée d'attente correspondant à l'intervalle de temps minimum entre deux instants de mesure successifs sur la fenêtre de collecte ;
- lorsque ledit coefficient directeur est inférieur au seuil, émission (E32) de la mesure à l'expiration d'une durée d'attente correspondant à l'intervalle de temps maximum entre deux instants de mesure successifs sur la fenêtre de collecte.

2. Procédé selon la revendication 1, dans lequel, lorsqu'une nouvelle mesure est effectuée par le capteur, la durée d'attente associée à la mesure précédente n'étant pas expirée, le procédé est de nouveau mis en oeuvre, la durée d'attente associée à la nouvelle mesure prend en compte la durée d'attente associée à la mesure précédente non réalisée.

3. Capteur (20), configuré pour effectuer des mesures à des instants de mesure, ledit capteur comprenant un module (205) de contrôle d'émission d'une mesure configuré pour :
- déterminer un seuil à partir de points de mesure précédant dans le temps un point de mesure courant sur une fenêtre de collecte, un instant de mesure et une mesure formant un point de mesure, dans lequel le seuil déterminé (E23) correspond au plus grand des coefficients directeurs entre deux points de mesure successifs sur la fenêtre de collecte ;
- attendre une durée d'attente, ladite durée d'attente correspondant à l'intervalle de temps minimum entre deux instants de mesure successifs sur la fenêtre de collecte lorsqu'un coefficient directeur d'une droite passant par le point de mesure courant et le point de mesure immédiatement précèdent est supérieur au seuil ou ladite durée d'attente correspondant à l'intervalle de temps maximum entre deux instants de mesure successifs sur la fenêtre de collecte lorsque ce coefficient directeur est inférieur au seuil,
- commander l'émission de la mesure par l'intermédiaire d'une interface réseau (202), lorsque la durée d'attente est écoulée.

4. Programme pour un capteur, comprenant des instructions de code de programme destinées à commander l'exécution des étapes du procédé d'émission d'une mesure effectuée par un capteur selon l'une des revendications 1 et 2 mises en oeuvre par le capteur, lorsque ledit programme est exécuté par ledit capteur.

5. Support d'enregistrement lisible par un capteur sur lequel est enregistré le programme selon la revendication 4.

## Patentansprüche

1. Verfahren zum Senden einer Messung, die von einem Sensor zu einem aktuellen Messzeitpunkt vorgenommen wird, wobei ein Messzeitpunkt und eine Messung einen Messpunkt bilden, wobei das Verfahren umfasst:
- Ermitteln (E2) eines Schwellenwerts anhand von Messpunkten, die dem aktuellen Messzeitpunkt zeitlich vorausgegangen sind, über ein Erfassungsfenster, wobei der ermittelte Schwellenwert (E23) der größten der Steigungen zwischen zwei aufeinander folgenden Messpunkten über das Erfassungsfenster entspricht;
- wenn eine Steigung einer Geraden, die durch den aktuellen Messpunkt und den unmittelbar vorausgegangenen Messpunkt verläuft, größer als der Schwellenwert ist, Senden (E31) der Messung bei Ablauf einer Wartedauer, die dem minimalen Zeitintervall zwischen zwei aufeinander folgenden Messzeitpunkten über das Erfassungsfenster entspricht;
- wenn die Steigung kleiner als der Schwellenwert ist, Senden (E32) der Messung bei Ablauf einer Wartedauer, die dem maximalen Zeitintervall zwischen zwei aufeinander folgenden Messzeitpunkten über das Erfassungsfenster entspricht.

2. Verfahren nach Anspruch 1, wobei, wenn eine neue Messung von dem Sensor vorgenommen wird, wenn die der vorausgegangenen Messung zugeordnete Wartedauer nicht abgelaufen ist, das Verfahren erneut durchgeführt wird, wobei die der neuen Messung zugeordnete Wartedauer die nicht erreichte Wartedauer berücksichtigt, die der vorhergegangenen Messung zugeordnet ist.

3. Sensor (20), der dazu ausgestaltet ist, Messungen zu Messzeitpunkten vorzunehmen, wobei der Sensor ein Modul (205) zur Steuerung des Sendens einer Messung umfasst, das dazu ausgestaltet ist:
- einen Schwellenwerts anhand von Messpunkten, die einem aktuellen Messzeitpunkt zeitlich vorausgegangen sind, über ein Erfassungsfenster zu ermitteln, wobei ein Messzeitpunkt und eine Messung einen Messpunkt bilden, wobei der ermittelte Schwellenwert (E23) der größten der Steigungen zwischen zwei aufeinander folgenden Messpunkten über das Erfassungsfenster entspricht;
- Warten einer Wartedauer, wobei die Wartedauer dem minimalen Zeitintervall zwischen zwei aufeinander folgenden Messzeitpunkten über das Erfassungsfenster entspricht, wenn eine Steigung einer Geraden, die durch den aktuellen Messpunkt und den unmittelbar vorausgegangenen Messpunkt verläuft, größer als der Schwellenwert ist, oder wobei die Wartedauer dem maximalen Zeitintervall zwischen zwei aufeinander folgenden Messzeitpunkten über das Erfassungsfenster entspricht, wenn diese Steigung kleiner als der Schwellenwert ist,
- Steuern des Sendens der Messung über eine Netzschnittstelle (202), wenn die Wartedauer verstrichen ist.

4. Programm für einen Sensor, umfassend Programmcodeanweisungen, die dazu bestimmt sind, die Ausführung der Schritte des Verfahrens zum Senden einer von einem Sensor vorgenommenen Messung nach einem der Ansprüche 1 und 2, die von dem Sensor durchgeführt werden, zu steuern, wenn das Programm von dem Sensor ausgeführt wird.

5. Von einem Sensor lesbares Speichermedium, auf dem das Programm nach Anspruch 4 gespeichert ist.

## Claims

1. Method for transmitting a measurement taken by a sensor at a current measurement instant, a measurement instant and a measurement forming a measurement point, said method comprising:
- determining (E2) a threshold on the basis of measurement points that temporally precede the current measurement point in a collection window, wherein the determined threshold (E23) corresponds to the largest of the slopes between two successive measurement points in the collection window;
- when a slope of a straight line that runs through the current measurement point and the measurement point that immediately precedes it is higher than the threshold, transmitting (E31) the measurement upon expiry of a waiting time that corresponds to the minimum time interval between two successive measurement instants in the collection window;
- when said slope is lower than the threshold, transmitting (E32) the measurement upon expiry of a waiting time that corresponds to the maximum time interval between two successive measurement instants in the collection window.

2. Method according to Claim 1, wherein, when a new measurement is taken by the sensor, the waiting time associated with the preceding measurement not having expired, the method is implemented again, the waiting time associated with the new measurement takes into account the unachieved waiting time associated with the preceding measurement.

3. Sensor (20) configured to take measurements at measurement instants, said sensor comprising a control module (205) for transmitting a measurement and which is configured to:
- determine a threshold on the basis of measurement points that temporally precede a current measurement point in a collection window, a measurement instant and a measurement forming a measurement point, wherein the determined threshold (E23) corresponds to the largest of the slopes between two successive measurement points in the collection window;
- wait for a waiting time, said waiting time corresponding to the minimum time interval between two successive measurement instants in the collection window when a slope of a straight line that runs through the current measurement point and the measurement point that immediately precedes it is higher than the threshold or said waiting time corresponding to the maximum time interval between two successive measurement instants in the collection window when this slope is lower than the threshold,
- command the transmission of the measurement by way of a network interface (202) when the waiting time has elapsed.

4. Program for a sensor, comprising program-code instructions intended to command the execution of the steps of the method for transmitting a measurement taken by a sensor according to either of Claims 1 and 2, said steps being implemented by the sensor, when said program is executed by said sensor.

5. Storage medium readable by a sensor and on which the program according to Claim 4 is stored.
